# NEW EUROPEAN PATENT SPECIFICATION

(11) **EP 1 460 186 B2**
(45) Date of publication and mention of the opposition decision: **08.02.2012**
(45) Mention of the grant of the patent: 21.06.2006
(21) Application number: 04075888.0
(22) Date of filing: 18.03.2004
(51) Int. Cl.: E03C 1/22

(54) **Triangular drainage**
Dreieckige Ablaufvorrichtung
Dispositif d'écoulement triangulaire

(30) Priority: 18.03.2003 NL 1022957
(43) Date of publication of application: 22.09.2004
(73) Proprietor: Easy Sanitairy Solutions B.V., 7581 EZ Losser (NL)
(72) Inventor: Keizers, Jurgen Hendrik Peter Joseph, 7581 AL Losser (NL)
(74) Representative: Pierce, Christopher James

(56) References cited:
- DE-A- 19 843 282
- FR-A- 2 300 176
- JP-A- 2 125 690
- JP-A- 59 156 964

## Description

The invention relates to a drain and a method for placing and finishing a drain for draining a liquid.

There are different drains known that are all used to enable draining of a liquid falling onto a surface. The surface is usually formed here such that the liquid, usually water, flows in the direction of the fitting. Such drains are also used in the construction of a shower tray to allow drainage of the water which falls into the shower tray. It is important that the drain is placed properly horizontally, so that all the water is drained via the drain into the drain pipe and does not remain therein.

The prior art drains are usually rectangular, so that they can be easily fitted in between the tiles used, which are normally also rectangular. Round fittings are sometimes also used, but these do not connect at all onto the usual tiles. If such a rectangular fitting must be placed in the centre of the shower tray, the floor must then be provided with a slope such that the water flows from all sides into the drain. This therefore means that a slope is required from four directions. Since the use of a central drain is not comfortable for the user, the drains are also placed in the corner of the shower tray. This still requires a slope in two directions. This still causes a number of problems. To begin with, it is difficult to create a slope in two directions. The drain must furthermore be placed horizontally, so that at least two sides of a rectangular drain do not run parallel to the slope. This adversely affects the aesthetic appearance of the shower floor and there is moreover a possibility of dirt being left at the transitions between the inclining slope and the straight drain.

There is moreover a trend toward laying tiles diagonally, whereby a correct connection to the drain, which is to be placed horizontally, is made even more difficult.

It is now an object of the invention to alleviate or even obviate the above stated drawbacks. This object is achieved with a method for placing and finishing a drain according to claim 1 and a drain according to claim 3.

In a preferred embodiment, the method according to the invention further comprises the step of tiling the floor provided with slope, wherein the rows of tiles run substantially parallel to the third side of the triangular form of the drain.

The triangular drain can be placed in the corner against the walls of for instance the shower tray or a tile floor and the slope can then connect in one direction onto the triangular drain. In the case of a right-angled triangle, the slope lies perpendicularly of the hypotenuse of the triangle. When rectangular tiles are used, the tiles can just be laid parallel to the wall and only one tile has to be cut in triangular form for connection to the triangular drain. If the tiles are placed diagonally, the rows can then run parallel to the sloping side of the triangle.

A triangular drain having the features of the preamble of claim 3, is already known from FR-A-2 300 176. This document describes a more or less triangular shaped drain and focusses on the connection of the sewage pipe to the drain.

A grating is preferably arranged in the opening. In addition, the container can, at least in top view, substantially take the form of an isosceles triangle. According to the invention, the vertex of the triangular form is substantially 90°. The drain hereby connects well onto the walls normally at right angles to each other.

As stated above, a drain according to the invention has a substantially triangular form. This means that the corners can be rounded or even truncated, whereby the triangular form could also be referred to as a trapezium form.

These and other features of the invention are further elucidated with reference to the annexed drawings.
Figure 1 shows a shower tray floor with a prior art drain.
Figure 2 shows a schematic view of a shower tray floor with a drain according to the invention.
Figures 3a and 3b show an embodiment of a drain according to the invention.

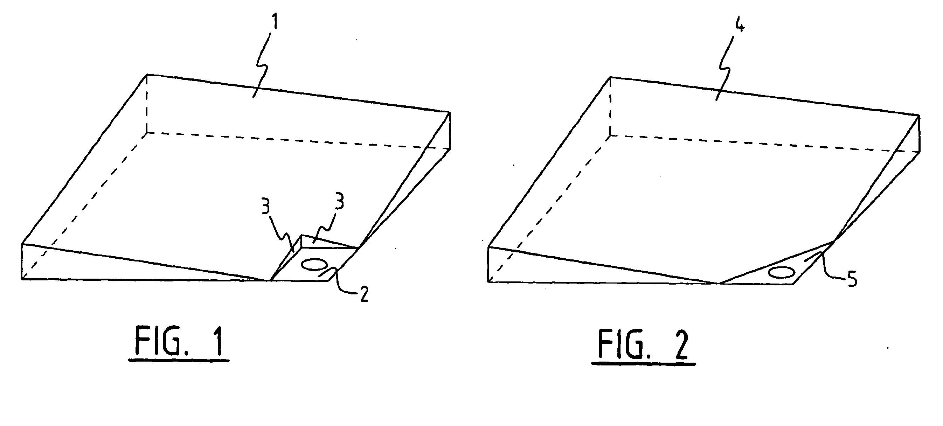

Figure 1 shows a shower floor 1 which has a slope in only one direction. A conventional drain 2 is placed in the corner of shower floor 1. This drain 2 has to be horizontal to be able to drain the water. If this fitting is not placed horizontally, water will be left lying in the corner, which could possibly result in leakage. As shown clearly in figure 1, this construction has the drawback that two edges 3 are created along the fitting which have an adverse effect on the appearance of the shower floor. Furthermore, dirt may remain behind these edges 3 and these edges can possibly injure the user.

Figure 2 shows a shower floor 4 according to the invention. This shower floor 4 also has a slope in only one direction. A shower drain 5 according to the invention is placed in the corner of shower floor 4. This shower drain 5, which has a triangular form, is also placed horizontally. Owing to the triangular form however, this shower drain connects well onto the sloping shower floor 4, whereby no edges are created.

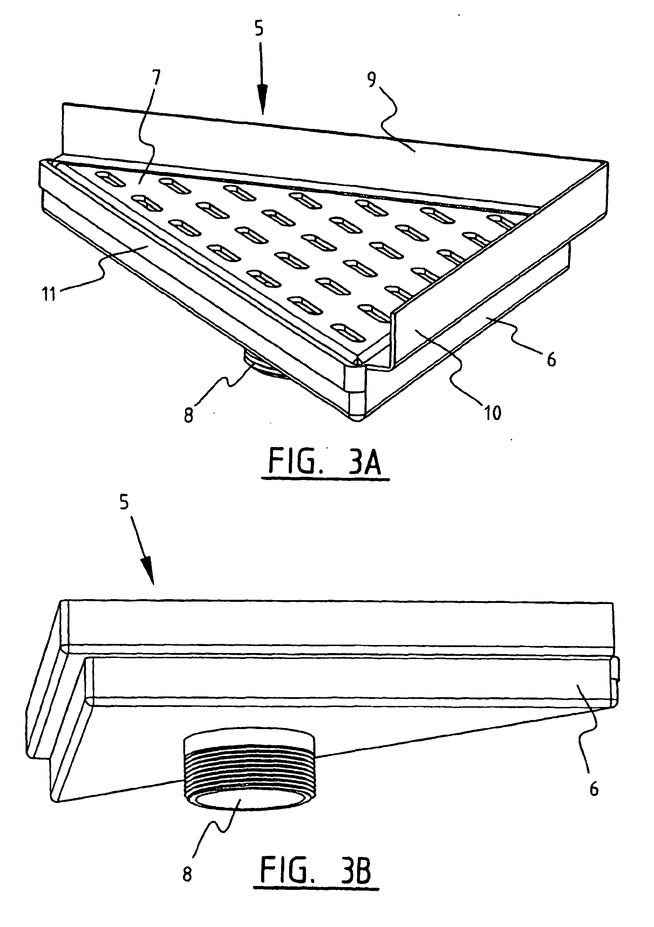

Figures 3a and 3b show shower drain 5 in more detail. Drain 5 has a container 6 which is open at the top. A grating 7 is arranged in this opening of container 6. A drain pipe connection 8 is further arranged on the underside of container 6 so that the drain can be connected to the sewer. Two L-shaped profiles are arranged on the first side 9 and the second side 10 of drain 5 so that a good connection to the adjoining wall can be obtained. The third side 11 is provided with a recess, thereby facilitating placing of drain 5 in a cement floor. Recess 11 helps in determining the correct depth of drain 5, such that a tile floor to be placed later connects properly onto drain 5.

## Claims

1. Method for placing and finishing a drain (5) in a tile floor (4) which is enclosed by at least two walls adjoining each other at an angle,
which drain comprises a container (6) open at the top for collecting a liquid and a drain pipe connection (8) which debouches into the open container (6),
wherein the container (6) has, at least in top view, a substantially triangular form, which method comprises the steps of:
- arranging the triangular drain (5) in the floor (4) in the corner against the two walls, wherein two sides (9, 10) of the triangular form run substantially parallel to the at least two walls;
- providing a slope in the floor (4), which slope runs substantially perpendicularly of the third side (11) of the triangular form of the drain (5).

2. Method as claimed in claim 1, comprising the step of:
- tiling the floor (4) provided with slope, wherein the rows of tiles run substantially parallel to the third side (11) of the triangular form of the drain (5).

3. Drain (5) for a tile floor (4) which is enclosed by at least two walls adjoining each other at a substantially 90° angle, which drain (5) comprises a container (6) open at the top for collecting a liquid and a drain pipe connection (8) which debouches into the open container (6), wherein the container (6) has, at least in top view, a substantially triangular form, **characterised in that** the vertex of the triangular form is substantially 90°.

4. Drain (5) as claimed in claim 3, wherein the container (6) substantially takes the form, at least in top view, of an isosceles triangle.

5. Drain (5) as claimed in claims 3 and 4, wherein it comprises a grating (7) arranged in the opening.

## Patentansprüche

1. Verfahren zum Anordnen und Fertigstellen eines Ablaufs (5) in einem Fliesenboden (4), der umschlossen ist von wenigstens zwei Wänden, die unter einem Winkel aneinander angrenzen, wobei der Ablauf eine Aufnahme (6) umfaßt, die oben offen ist, um eine
Flüssigkeit zu sammeln, sowie einen Ablaufrohranschluß (8), der in die offene Aufnahme (6) mündet, wobei die Aufnahme (6) zumindest in Draufsicht eine im wesentlichen dreieckige Form hat, wobei das Verfahren die Schritte umfaßt:
- Anordnen des dreieckigen Ablaufs (5) in dem Boden (4) in der Ecke gegen die beiden Wände, wobei zwei Seiten (9, 10) der dreieckigen Form im wesentlichen parallel zu den wenigstens zwei Wänden verlaufen;
- Vorsehen einer Neigung in dem Boden (4), wobei die Neigung im wesentlichen senkrecht von der dritten Seite (11) der dreieckigen Form des Ablaufs (5) verläuft.

2. Verfahren nach Anspruch 1, umfassend den Schritt:
- Fliesen des mit Neigung versehenen Bodens (4), wobei die Reihen an Fliesen im wesentlichen parallel zu der dritten Seite (11) der dreieckigen Form des Ablaufs (5) verlaufen.

3. Ablauf (5) für einen Fliesenboden (4), der von wenigstens zwei Wänden umschlossen ist, die aneinander unter einem Winkel von im wesentlichen 90° angrenzen, wobei der Ablauf (5) eine Aufnahme (6) umfaßt, die an der Oberseite offen ist, um eine Flüssigkeit zu sammeln, sowie einen Ablaufrohranschluß (8), der in die offene Aufnahme (6) mündet, wobei die Aufnahme (6) zumindest in Draufsicht eine im wesentliche dreieckige Form hat, **dadurch gekennzeichnet, daß** die Spitze der dreieckigen Form im wesentlichen 90° hat.

4. Ablauf (5) nach Anspruch 3, bei welchem die Aufnahme (6), zumindest in Draufsicht im wesentlichen die Form eines gleichschenkeligen Dreiecks hat.

5. Auflauf (5) nach Anspruch 3 und 4, der ein in der Öffnung angeordnetes Gitter (7) umfaßt.

## Revendications

1. Procédé permettant de mettre en place et de finir un élément d'évacuation (5) dans un sol carrelé (4) qui est entouré par au moins deux parois attenantes l'une par rapport à l'autre selon un angle, lequel élément d'évacuation comprend un récipient (6) ouvert sur le dessus pour collecter un liquide et un raccordement (8) de tuyau d'évacuation qui débouche dans le récipient ouvert (6), dans lequel le récipient (6) a au moins, en vue de dessus, une forme sensiblement triangulaire, lequel procédé comprend les étapes consistant à :
- agencer l'élément d'évacuation (5) triangulaire dans le sol (4) dans le coin situé contre les deux parois, dans lequel deux côtés (9, 10) de la forme triangulaire s'étendent sensiblement parallèlement aux au moins deux parois ;
- prévoir une inclinaison dans le sol (4), laquelle inclinaison s'étend sensiblement perpendiculairement au troisième côté (11) de la forme triangulaire du tuyau d'évacuation (5).

2. Procédé selon la revendication 1, comprenant l'étape consistant à :
- carreler le sol (4) doté de l'inclinaison, dans lequel les rangées de carreaux s'étendent sensiblement parallèlement au troisième côté (11) de la forme triangulaire de l'élément d'évacuation (5).

3. Elément d'évacuation (5) pour un sol carrelé (4) qui est entouré par au moins deux parois attenantes l'une par rapport à l'autre selon un angle sensiblement de 90°, lequel élément d'évacuation (5) comprend un récipient (6) ouvert sur le dessus pour collecter un liquide et un raccordement (8) de tuyau d'évacuation qui débouche dans le récipient (6) ouvert, dans lequel le récipient (6) a au moins, en vue de dessus, une forme sensiblement triangulaire, **caractérisé en ce que** le sommet de la forme triangulaire est sensiblement de 90°.

4. Elément d'évacuation (5) selon la revendication 3, dans lequel le récipient (6) prend sensiblement la forme, au moins, en vue de dessus, d'un triangle isocèle.

5. Elément d'évacuation (5) selon les revendications 3 et 4, dans lequel il comprend une grille (7) agencée dans l'ouverture.
